# EUROPEAN PATENT APPLICATION

(11) **EP 4 831 591 A1**
(43) Date of publication of application: **28.10.2026**
(21) Application number: 26173407.3
(22) Date of filing: 20.04.2026
(51) Int. Cl.: G01D 5/14

(54) **MODULAR LINEAR POSITION SENSOR FOR CYLINDER ACTUATOR PISTON DETECTION**

(30) Priority: 21.04.2025 US 202563791830 P
(71) Applicant: Parker-Hannifin Corporation, Cleveland, OH 44124-4141 (US)
(72) Inventor: STARIHA, Joseph J, Minneapolis (US); LARSON, Jacob S, Falcon Heights (US); LARSON, Erik C, Edina (US)
(74) Representative: Murgitroyd & Company

(57) **Abstract**

An example assembly includes an actuator housing, a cylinder actuator mounted within the actuator housing, wherein the cylinder actuator has a cylinder and a piston movable within the cylinder, wherein the piston's range of movement is divided into a set of detection ranges, a magnet coupled to the piston at a central longitudinal axis of the piston and cylinder, and a linear position sensor having a sensor housing mounted externally to the actuator housing, and a plurality of sensor nodes mounted within the sensor housing at a node plane formed at a particular distance from the central longitudinal axis regardless of cylinder diameter. Each sensor node is associated with a respective detection range and includes one or more magnetic sensors providing information indicating magnet position when the magnet is in that sensor node's detection range.

## Description

### CROSS-REFERENCE TO RELATED APPLICATIONS

This application claims priority to U.S. Provisional Application No. 63/791,830, filed April 21, 2025, the entire contents of which are herein incorporated by reference.

### FIELD OF INVENTION

The present disclosure relates to position sensing systems for hydraulic and pneumatic cylinder actuators, and more particularly to a modular linear position sensor configuration for detecting piston position in electro-hydraulic actuators using externally mounted magnetic sensor nodes.

### BACKGROUND

Control of hydraulic and pneumatic cylinder actuators may involve controlling forces applied by a piston, controlling position of the piston within the cylinder, and controlling speed of the piston. Accurate position information of a moving piston can enable high precision control for various applications, including steering systems, equipment requiring multiple position set-points such as snowplows, and coordinated control of multiple actuators.

Various approaches exist for sensing piston position in cylinder actuators. Linear Variable Differential Transformer (LVDT) devices convert a piston's linear motion into an electrical signal. However, LVDTs may require boring of a piston rod, which adds manufacturing complexity and cost, and may reduce the structural strength of the rod.

String potentiometers provide position sensing but are typically externally mounted, making them susceptible to harsh environmental conditions encountered in mobile applications. String potentiometers are generally better suited for laboratory or manufacturing equipment where they can be adequately protected from environmental exposure.

In electro-hydraulic actuators where an electric motor drives a pump to provide fluid to a cylinder actuator, motor encoders could theoretically be used to determine rotary position of the motor rotor. However, momentum in the hydraulic fluid and volume changes due to temperature variations cause the pump's volumetric efficiency to vary. This variability means that a single rotation may not repeatably move a specific volume of fluid, reducing the accuracy of motor encoder-based position measurement for such applications.

Some position measurement systems based on magnetic fields provide binary measurement of position, such as an indication of whether an object is to the left or right of a sensor, rather than providing continuous position measurement. In other systems, a sensor measures position of a magnet attached to a moving object, but the sensor size increases proportionally with the measurement range. For example, measuring the position of a hydraulic piston with a 500 millimeter range of motion may require a sensor of at least 500 millimeters in length, which may not be feasible in space-constrained applications.

Existing sensor configurations may also lack modularity, with each configuration working for a specific range of stroke lengths and a particular cylinder bore diameter. This lack of modularity can increase inventory requirements and limit flexibility when accommodating different actuator configurations.

It may be desirable to have a position sensing system that can determine piston position accurately while addressing one or more of the considerations described above. It is with respect to these and other considerations that the disclosure made herein is presented.

### SUMMARY

This summary is provided to introduce a selection of concepts in a simplified form that are further described below in the detailed description. This summary is not intended to identify key features or essential features of the claimed subject matter, nor is it intended to be used as an aid in determining the scope of the claimed subject matter.

In a first example implementation, the present disclosure describes an assembly. The assembly includes an actuator housing. The assembly includes a cylinder actuator mounted within the actuator housing, wherein the cylinder actuator has a cylinder and a piston that is movable within the cylinder, wherein a range of movement of the piston is divided into a set of ranges of detection. The assembly includes a magnet coupled to the piston and disposed at a central longitudinal axis of the piston and the cylinder. The assembly includes a linear position sensor having a sensor housing that is mounted externally to the actuator housing, and a plurality of sensor nodes mounted within the sensor housing at a node plane that is formed at a particular distance from the central longitudinal axis of the cylinder regardless of a diameter of the cylinder. Each sensor node of the plurality of sensor nodes is associated with a respective range of detection of the set of ranges of detection and includes one or more magnetic sensors. The one or more magnetic sensors provide information indicating a position of the magnet when the magnet is in the respective range of detection of the sensor node.

In a second example implementation, the present disclosure describes a position sensing system for a cylinder actuator having a piston movable within a cylinder. The position sensing system includes a magnet configured to be coupled to the piston at a central longitudinal axis of the cylinder. The position sensing system includes a sensor housing configured to be mounted externally to an actuator housing containing the cylinder actuator. The position sensing system includes a plurality of sensor nodes mounted within the sensor housing at a node plane. The node plane is positioned at a fixed distance from the central longitudinal axis regardless of a bore diameter of the cylinder. Each sensor node of the plurality of sensor nodes includes one or more magnetic sensors configured to detect a magnetic field of the magnet. A number of sensor nodes of the plurality of sensor nodes is variable based on a stroke length of the piston.

In a third example implementation, the present disclosure describes a method of sensing a position of a piston in a cylinder actuator. The method includes coupling a magnet to the piston at a central longitudinal axis of the piston and a cylinder of the cylinder actuator. The method includes mounting a sensor housing externally to an actuator housing containing the cylinder actuator, wherein the sensor housing includes a plurality of sensor nodes mounted at a node plane that is at a particular distance from the central longitudinal axis regardless of a diameter of the cylinder. The method includes detecting, by one or more magnetic sensors of a sensor node of the plurality of sensor nodes, a magnetic field produced by the magnet when the magnet is within a respective range of detection associated with the sensor node. The method includes providing, by the sensor node, information indicating a position of the magnet based on the detected magnetic field.

The foregoing general description of the illustrative embodiments and the following detailed description thereof are merely exemplary aspects of the teachings of this disclosure and are not restrictive.

### BRIEF DESCRIPTION OF FIGURES

The novel features believed characteristic of the illustrative examples are set forth in the appended claims. The illustrative examples, however, as well as a preferred mode of use, further objectives and descriptions thereof, will best be understood by reference to the following detailed description of an illustrative, non-limiting and non-exhaustive examples of the present disclosure when read in conjunction with the accompanying Figures.
FIG. 1A illustrates a perspective view of an assembly of an electro-hydraulic actuator, according to an example implementation.
FIG. 1B illustrates another perspective view of the assembly of FIG. 1A, according to an example implementation.
FIG. 1C illustrates a side view of the assembly of FIG. 1A, according to an example implementation.
FIG. 2 illustrates a partial cross-sectional view of the assembly of FIG. 1A depicting a position sensing system, according to an example implementation.
FIG. 3 illustrates a simplified schematic representation of a cylinder actuator and a position sensing system, according to an example implementation.
FIG. 4 is a block diagram of a sensor node, according to an example implementation.
FIG. 5 is a flowchart of a method of sensing a position of a piston in a cylinder actuator, according to an example implementation.

### DETAILED DESCRIPTION

The following description sets forth exemplary aspects of the present disclosure. It should be recognized, however, that such description is not intended as a limitation on the scope of the present disclosure. Rather, the description also encompasses combinations and modifications to those exemplary aspects described herein.

The present disclosure describes implementations relating to a modular linear position sensor configuration, which may also be referred to as a Non-Ferrous Linear Sensor (NFLS), for detecting piston position in cylinder actuators. The modular linear position sensor configuration may enable accurate position sensing across various actuator configurations having different stroke lengths, cylinder diameters, and rod diameters. In some cases, the modular linear position sensor configuration employs a non-contacting magnetic sensing approach that detects changes in a magnetic field produced by a magnet coupled to a piston of a cylinder actuator.

Sensing the position of a piston rod in real time may allow for precise position control, speed control, and proportional-integral-derivative (PID) control of the cylinder actuator. Such position sensing capabilities may enable various applications including steering applications, applications requiring multiple position set-points such as snowplows, and controlling multiple actuators in unison to reduce or eliminate the need for multi-cylinder systems with flow control.

The modular linear position sensor configuration may include a plurality of sensor nodes that are distributed along a length of a sensor housing. Each sensor node may be associated with or is assigned a respective range of detection of the piston, and each sensor node may include one or more magnetic sensors configured to detect the magnetic field of the magnet when the magnet is within the respective range of detection of that sensor node. The number of sensor nodes may be varied depending on the stroke length of the piston, thereby providing modularity in accommodating different actuator configurations.

In some cases, the sensor housing may be mounted externally to an actuator housing that contains the cylinder actuator. The sensor nodes may be mounted within the sensor housing at a node plane that is formed at a particular distance from a central longitudinal axis of the cylinder. This particular distance may remain fixed regardless of the diameter of the cylinder bore, which may allow the same sensor configuration to be used with cylinders of different bore diameters.

The magnet may be coupled to a piston head of the piston and disposed at the central longitudinal axis of the piston and the cylinder. Since the magnet may be positioned at a fixed distance from the node plane regardless of the cylinder bore diameter, stroke length, or rod diameter, the same magnet may be used across various actuator configurations. This arrangement may provide modularity in both mechanical and software aspects of the position sensing system.

The non-contacting sensing method based on magnetic field detection may avoid introducing additional leak points that could otherwise be present with contact-based sensing approaches. The modular design may allow the sensor to be expanded by adding sensor nodes to accommodate longer stroke lengths, with corresponding lengthening of the sensor housing and addition of mounting flanges as appropriate.

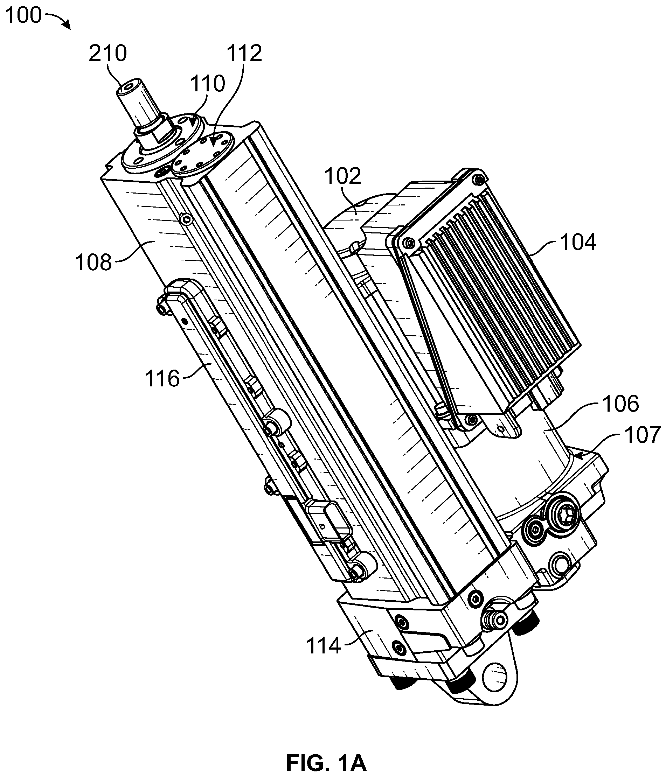

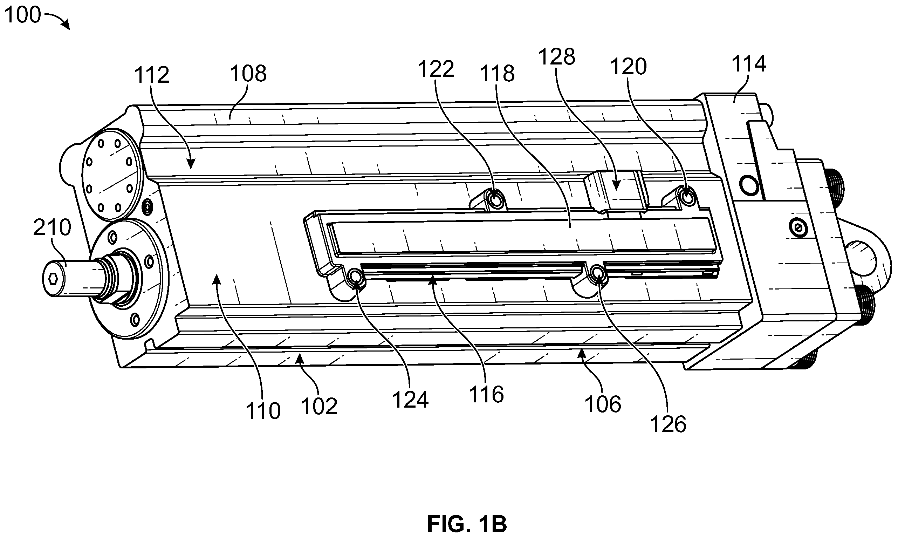

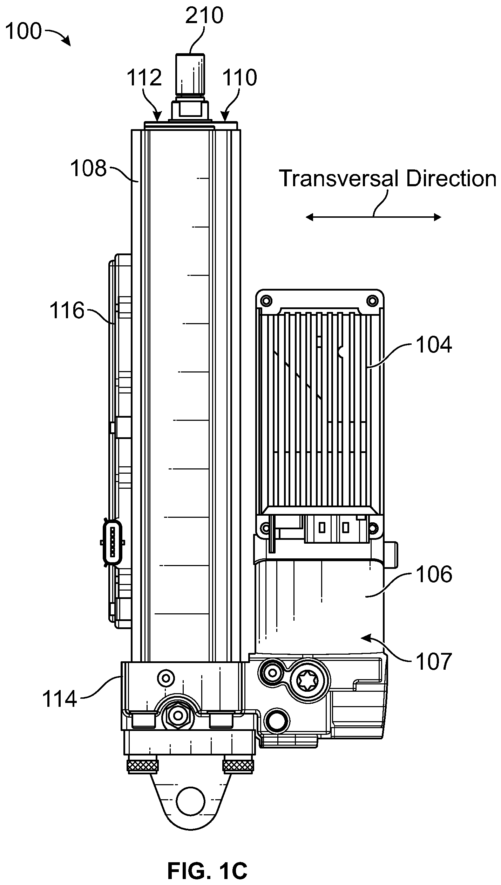

Referring to FIGS. 1A-1C, an assembly 100 of an electro-hydraulic actuator (EHA) is illustrated according to an example implementation. FIG. 1A illustrates a perspective view of the assembly 100, FIG. 1B illustrates another perspective view of the assembly 100, and FIG. 1C illustrates a side view of the assembly 100. Although the position sensing system disclosed herein is described with respect to an EHA assembly, the disclosed configuration may be used with or may be applicable to any standalone cylinder actuators, and is not limited to an EHA implementation.

The assembly 100 may include an electric motor 102 and a controller 104 that controls operation of the electric motor 102. The electric motor 102 may be any type of electric motor including Alternating Current (AC) motors, Direct Current (DC) motors, brushless DC motors, synchronous motors, or induction motors. In some cases, the controller 104 may include an inverter configured as a power converter that converts DC power received at the inverter to three-phase AC power that may be provided to wire windings of a stator of the electric motor 102 to drive the electric motor 102. The controller 104 may also have a microprocessor that provides a pulse width modulated (PWM) signal to operate the power converter.

With continued reference to FIGS. 1A-1C, the assembly 100 may also include a pump 106 driven by the electric motor 102. The electric motor 102 may control the rate and direction of hydraulic fluid flow from the pump 106 by controlling the speed and direction of rotation of an output shaft of the electric motor 102 used to drive the pump 106, which may be configured as a bi-directional fluid flow source. The pump 106 may be any type of pump such as a piston pump, a gear pump, or a vane pump. The pump 106 may be configured to be disposed in or immersed, at least partially, in a fluid reservoir 107.

The assembly 100 may further include an actuator housing 108. The actuator housing 108 may be made of aluminum, for example. The actuator housing 108 may contain a cylinder actuator 110 and an accumulator 112. The accumulator 112 may be a piston-type or bladder-type accumulator.

As further shown in FIGS. 1A-1C, the assembly 100 may also include a manifold 114. The manifold 114 may be formed as a metallic block that has a plurality of fluid passages formed therein. Such fluid passages may enable fluid flow between the pump 106, the cylinder actuator 110, and the accumulator 112. The manifold 114 may further include valves disposed therein to control direction of fluid flow, control pressure levels, and mode of operation of the cylinder actuator 110. In some cases, the fluid reservoir 107 may be at least partially formed in a pump housing, or may be formed at least partially in the manifold 114.

Referring to FIG. 1B, the assembly 100 may include a linear position sensor 116 mounted to the actuator housing 108. The linear position sensor 116 may be configured to provide sensor information indicative of a position of a piston of the cylinder actuator 110. The linear position sensor 116 may include a sensor housing 118 that is mounted externally to the actuator housing 108 via a plurality of flanges including a flange 120, a flange 122, a flange 124, and a flange 126. The mounting flanges 120-126 may be equally spaced such that extending the linear position sensor 116 by adding more sensor nodes adds more flanges depending on the number of sensor nodes added. The linear position sensor 116 may provide sensor information indicating a position of the piston of the cylinder actuator 110 via an electric connector 128 (e.g., a Molex connector). A cable connected to the controller 104 of the assembly 100 may be plugged into the electric connector 128 such that the controller 104 receives the sensor information indicating the position of the piston.

In the configuration of the assembly 100 as depicted in FIGS. 1A-1C, the cylinder actuator 110 and the accumulator 112 may be coplanar and may be disposed side by side, with the accumulator 112 being shifted laterally relative to the cylinder actuator 110. The electric motor 102 and the pump 106 may be disposed in a plane that is parallel to, and shifted transversely from, a respective plane of the cylinder actuator 110 and the accumulator 112. The manifold 114 may extend transversely to be fluidly coupled to both the pump 106, on a first side of the manifold 114, and the cylinder actuator 110 and the accumulator 112, on a second side of the manifold 114. The manifold 114 may have fluid passages that provide fluid communication between the pump 106, the fluid reservoir 107, the cylinder actuator 110, and the accumulator 112.

The assembly 100 may be used in applications requiring multiple position set-points such as snowplows, and controlling multiple actuators in unison to reduce or eliminate the need for multi-cylinder systems with flow control.

Having described the overall configuration and components of the assembly, the following sections provide a more detailed description of the internal configuration of the cylinder actuator and the modular sensor node arrangement of the linear position sensor. The detailed description that follows addresses the structural relationship between the cylinder, piston, and magnet, as well as the arrangement of sensor nodes within the sensor housing that enables modular position sensing across various actuator configurations. The description also addresses how the sensor nodes may be configured to detect the position of the magnet as the piston moves through different ranges of movement within the cylinder.

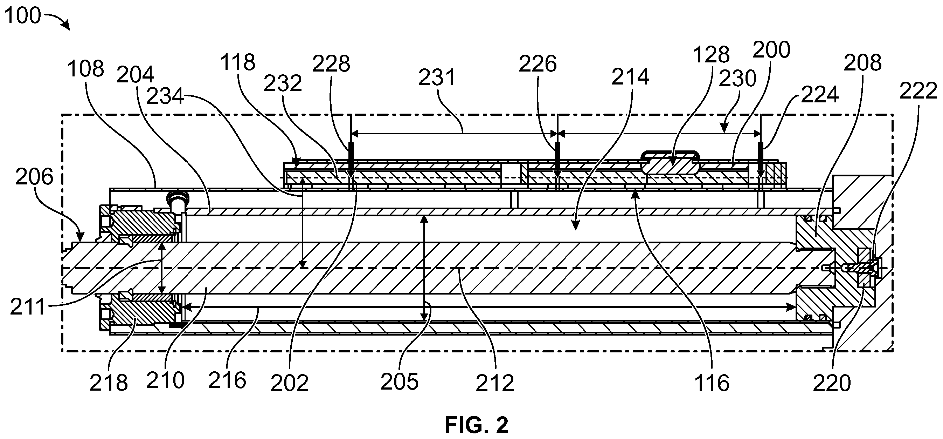

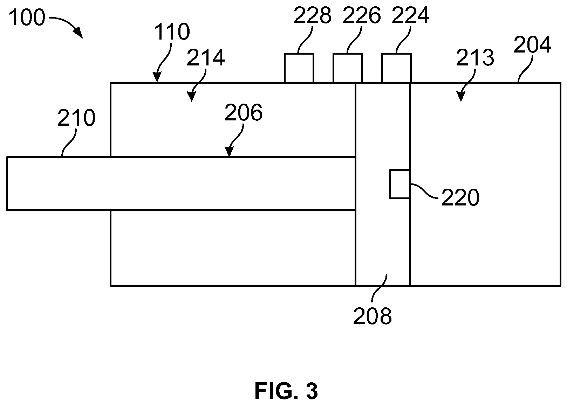

Referring to FIGS. 2 and 3, a partial cross-sectional view and a simplified schematic representation of the cylinder actuator 110 and a position sensing system are illustrated according to an example implementation. The sensor housing 118 may include a first housing portion 200 coupled to a second housing portion 202, where the second housing portion 202 interfaces with the actuator housing 108. In some cases, the first housing portion 200 and the second housing portion 202 may snap together to form the sensor housing 118. The first housing portion 200 and the second housing portion 202 may be injection molded plastic parts. The electric connector 128 may be formed in the first housing portion 200. In some cases, the sensor housing 118 may include a vent with a breathable patch to allow air to move in and out when the linear position sensor 116 is in warm or cold environments or at different elevations.

With continued reference to FIGS. 2 and 3, the cylinder actuator 110 may have a cylinder 204 having a bore diameter 205. The cylinder actuator 110 may also have a piston 206 that is slidably accommodated within the cylinder 204. The piston 206 may be configured to move in a linear direction within the cylinder 204. The piston 206 may include a piston head 208 and a rod 210 extending from the piston head 208 along a central longitudinal axis 212 of the cylinder 204. The rod 210 may have a rod diameter 211. The rod 210 is shown protruding from the actuator housing 108 in FIGS. 1A-1C.

The piston head 208 may divide an internal space of the cylinder 204 into a first chamber 213 and a second chamber 214 as shown in FIG. 3. The first chamber 213 may be referred to as a head-side chamber as fluid therein interacts with the piston head 208. The second chamber 214 may be referred to as a rod-side chamber as the rod 210 is disposed partially therein. If fluid is provided to the first chamber 213, the piston 206 may extend while fluid is discharged from the second chamber 214. Conversely, if fluid is provided to the second chamber 214, the piston 206 may retract while fluid is discharged from the first chamber 213.

As further shown in FIG. 2, the piston 206 may have a stroke length 216 that the piston 206 traverses from a fully retracted position to a fully extended position when the piston head 208 reaches an end cap 218. The actuator housing 108 may be configured as a common extrusion with the cylinder 204 bore machined therein. The bore may be machined to different diameters while maintaining the same external dimensions of the actuator housing 108. For example, the bore diameter 205 may be 1.5 inch or 2 inch to accommodate different cylinder sizes.

Referring to FIGS. 2 and 3, the assembly 100 may include a magnet 220 that is coupled to, affixed to, or embedded in the piston head 208. In the example implementation of FIG. 2, the magnet 220 may be fixed to the piston head 208 via a shoulder screw 222. The shoulder screw 222 may bottom out and entrap the magnet 220 without crushing the magnet 220. The shoulder screw 222 may have a shoulder that is bigger than a major diameter of threads of the shoulder screw 222 such that the shoulder screw 222 bottoms out without touching the magnet 220. In some cases, the magnet 220 may be fixed to the piston head 208 using alternative means including a plastic expansion plug, a socket headed cap screw, a metal press fit pin, or a screw on cap. The magnet 220 may be disposed at the central longitudinal axis 212 of the piston 206 and the cylinder 204.

With continued reference to FIGS. 2 and 3, the linear position sensor 116 may include a plurality of sensor nodes mounted within the sensor housing 118. For example, the linear position sensor 116 may include a first sensor node 224, a second sensor node 226, and a third sensor node 228. The sensor nodes 224-228 may be spaced apart along a length of the sensor housing 118. Each sensor node of the sensor nodes 224-228 may include one or more magnetic sensors to detect magnetic flux of the magnet 220. In some cases, each sensor node may have three magnetic sensors for redundancy or error mitigation. Having more than one magnetic sensor at each sensor node may also account for environmental conditions such as noise from the Earth's magnetic field.

The magnetic sensors of the sensor nodes 224-228 may be mounted on one or more printed circuit boards (PCBs). In an example, a single PCB may be mounted within the sensor housing 118, and the magnetic sensors of the sensor nodes 224-228 may be mounted to such PCB. In some cases, the magnetic sensors may be anisotropic magnetoresistive (AMR) sensors. An AMR sensor may be made up of a thin film of alloy on a glass or silicon board. Such AMR sensor may measure position of the piston 206 by interacting with the magnet 220 and detecting changes in electrical resistance of the alloy material in response to magnetic field strength or intensity.

As further shown in FIG. 2, the sensor nodes 224-228 may be equi-spaced. A spacing 230 between the first sensor node 224 and the second sensor node 226 may be the same as a respective spacing 231 between the second sensor node 226 and the third sensor node 228. The sensor nodes 224-228 may all be mounted on a node plane 232, which may be in the first housing portion 200 of the sensor housing 118.

The node plane 232 may be formed at a particular distance 234 from the central longitudinal axis 212 of the cylinder 204 that is fixed regardless of the bore diameter 205 of the cylinder 204. Particularly, since the actuator housing 108 may have the same external dimensions regardless of the bore diameter 205, and since the sensor housing 118 is mounted to the actuator housing 108, the particular distance 234 from the node plane 232 to the central longitudinal axis 212 of the cylinder 204 may be fixed regardless of the bore diameter 205. Since the magnet 220 may be disposed at the central longitudinal axis 212, the magnet 220 (or at least a center thereof) may be at the particular distance 234 from the node plane 232. Thus, the same magnet 220 may be used regardless of the bore diameter 205, the stroke length 216, and the rod diameter 211.

With this configuration, the linear position sensor 116 may be modular and may accommodate cylinders of various diameters, various strokes, and various rod diameters. Each sensor node may be configured to detect position of the piston 206 in four inch increments, for example. For different stroke lengths, more or fewer sensor nodes may be used in a modular manner to cover the particular stroke length 216 of the piston 206. For example, if the stroke length 216 is in a 6 inch to 8 inch range, then two sensor nodes may be used. If the stroke length 216 is in a 10 inch to 12 inch range, then three sensor nodes may be used. If the stroke length 216 is in a 14 inch to 16 inch range, then four sensor nodes may be used. If the stroke length 216 is in an 18 inch to 20 inch range, then five sensor nodes may be used. Each sensor node added may increase the sensing range. The sensor housing 118 may be lengthened and more mounting flanges may be added as more sensor nodes are added.

Having described the physical configuration of the position sensing system including the arrangement of the sensor housing, the sensor nodes, and the magnet relative to the cylinder actuator, the following section addresses the internal architecture of individual sensor nodes according to an example implementation. Each sensor node may include electronic components that enable detection of magnetic field changes, processing of sensor data, and communication with other sensor nodes or with a controller of the assembly. The internal architecture of each sensor node may include one or more processors, magnetic sensors, communication interfaces, data storage, and direct memory access controllers that facilitate high-speed data transfer between sensor nodes without burdening the processors with communication tasks. The communication capabilities within each sensor node may enable the sensor nodes to operate in a daisy-chained configuration where position information may be shared and reconciled between adjacent sensor nodes when the magnet is in a transition region between the respective ranges of detection of two sensor nodes.

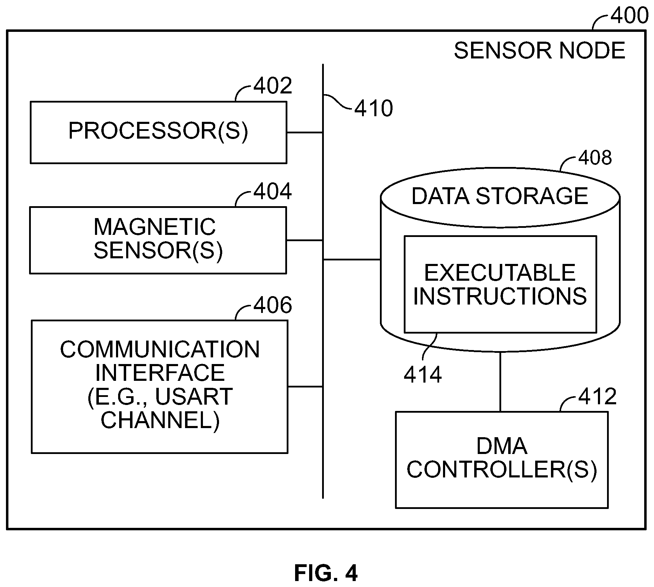

Referring to FIG. 4, a block diagram of a sensor node 400 is illustrated according to an example implementation. The sensor node 400 may represent any of the sensor nodes described above with respect to FIGS. 2 and 3, such as the first sensor node 224, the second sensor node 226, or the third sensor node 228. The sensor node 400 may include a processor(s) 402, one or more magnetic sensor(s) 404, a communication interface 406, and a data storage 408, each connected to a communication bus 410. The sensor node 400 may also include one or more Direct Memory Access (DMA) controller(s) 412. Components of the sensor node 400 may be mounted to a PCB.

With continued reference to FIG. 4, the data storage 408 may store executable instructions 414. The data storage 408 may be a non-transitory computer readable storage medium. The data storage 408 may include or take the form of one or more computer-readable storage media that may be read or accessed by the processor(s) 402. The computer-readable storage media may include volatile and/or non-volatile storage components, such as optical, magnetic, organic or other memory or disc storage, which may be integrated in whole or in part with the processor(s) 402. In some cases, the data storage 408 may be implemented using a single physical device, while in other cases, the data storage 408 may be implemented using two or more physical devices.

The processor(s) 402 may be a general-purpose processor or a special purpose processor such as digital signal processors or application-specific integrated circuits (ASICs). The processor(s) 402 may receive inputs from the communication interface 406, the communication bus 410, or directly from other components such as the magnetic sensor(s) 404. The processor(s) 402 may then process the inputs to generate outputs indicating position of the magnet 220 and the piston 206. The processor(s) 402 may be configured to execute the executable instructions 414 that are stored in the data storage 408. When the executable instructions 414 are executed by the processor(s) 402, the processor(s) 402 may be caused to perform operations associated with determining changes in magnetic field direction or intensity as sensed by the magnetic sensor(s) 404, determining a position of the magnet 220 and the piston 206 when the piston 206 and the magnet 220 are in a particular assigned range of detection of the sensor node 400, and sending position information to a subsequent sensor node.

As further shown in FIG. 4, the communication interface 406 of the sensor node 400 may include hardware to enable communication within the sensor node 400 and between the sensor node 400 and other devices or sensor nodes. The communication interface 406 may enable communicating with a communication bus of the position sensing system, the assembly 100, or the cylinder actuator 110 in which the sensor node 400 is used, or a communication bus of a system in which the sensor node 400 is deployed such as a CAN bus of a vehicle or machine. The hardware of the communication interface 406 may include transmitters, receivers, and antennas. In some cases, the communication interface 406 may include Universal Synchronous/Asynchronous Receive Transmit (USART) channels as communication links between the sensor nodes.

In some cases, the communication interface 406 may be a wireless interface and/or one or more wireline interfaces that allow for both short-range communication and long-range communication to one or more networks or other devices. Such wireless interfaces may provide for communication under one or more wireless communication protocols including Bluetooth, Wi-Fi, Long-Term Evolution (LTE), cellular communications, or near-field communication (NFC). Wireline interfaces may include an Ethernet interface, a CAN network interface, a USB interface, or similar interface to communicate via a wire, a twisted pair of wires, a coaxial cable, an optical link, a fiber-optic link, or other physical connection to a wireline network. The communication interface 406 may be configured to receive input data from other sensor nodes and may be configured to send output data to other sensor nodes or the controller 104.

With continued reference to FIG. 4, the sensor nodes may communicate using an inter-integrated circuit (I²C) protocol. A chip onboard the sensor node 400 may recognize a magnetic signal between adjacent nodes and may reconcile the position between the adjacent nodes. For example, when the magnet 220 is in a transition region between the respective ranges of detection of two adjacent sensor nodes, the chip may reconcile position information from both sensor nodes to determine the position of the magnet 220 and the piston 206.

The DMA controller(s) 412 may be in communication with the data storage 408 of the sensor node 400. The DMA controller(s) 412 may be computer hardware features that allow accessing the data storage 408 directly, bypassing the processor(s) 402. The DMA controller(s) 412 may offload data transfer tasks from the processor(s) 402, reducing processor overhead and improving performance and responsiveness of the sensor node 400. The DMA controller(s) 412 may enable high-speed data processing, such as moving large blocks of data between the sensor nodes, or between different locations in the data storage 408.

In some cases, the DMA controller(s) 412 may include two DMA controllers to allow every sensor node in the position sensing system to transmit and receive traffic data without loading the processor(s) 402 with communications burdens. One DMA controller may be associated with receiving data from another sensor node, while another DMA controller may be associated with transmitting data to another sensor node. For example, if the sensor node 400 transfers position data to another sensor node or to the controller 104, a DMA controller from the DMA controller(s) 412 may be configured to handle the data transfer. The processor(s) 402 may set up the DMA controller(s) 412 to move data between the data storage 408 and the communication interface 406, which interfaces with the communication bus 410. Once configured, the DMA controller(s) 412 may be able to transfer the data between the data storage 408 and the communication interface 406 without further intervention from the processor(s) 402. This approach may offload the data transfer workload from the processor(s) 402, allowing the processor(s) 402 to perform other tasks. Similarly, a DMA controller may be used to receive data from other sensor nodes by transferring incoming data directly from the communication interface 406 to the data storage 408.

In operation, the position sensing system may detect the position of the piston as the piston moves within the cylinder. Each sensor node may monitor magnetic field characteristics produced by the magnet coupled to the piston head. When the magnet enters the respective range of detection associated with a particular sensor node, the magnetic sensors at that sensor node may detect changes in magnetic field strength or intensity. The magnetic sensors may measure the angle of the magnetic field by detecting changes in electrical resistance of alloy material within the sensors in response to the magnetic field produced by the magnet.

Each sensor node may independently execute an algorithm to determine the position of the magnet based on the magnetic field measurements obtained by the magnetic sensors at that sensor node. The algorithm may process the electrical resistance values from the magnetic sensors and may convert the resistance values into position information indicating the location of the magnet within the respective range of detection of that sensor node. The position information may represent a linear position of the piston along the central longitudinal axis of the cylinder.

When the magnet is positioned within the respective range of detection of a single sensor node, that sensor node may provide position information to a controller (or a master sensor node) of the assembly. The position information may be transmitted via the communication interface of the sensor node to a communication bus of the assembly, such as a CAN bus. The controller may receive the position information and may use the position information for position control, speed control, or proportional-integral-derivative control of the cylinder actuator.

As the piston moves through the cylinder, the magnet may transition from the respective range of detection of one sensor node to the respective range of detection of an adjacent sensor node. During such transitions, the magnetic signal may be detected by magnetic sensors at both adjacent sensor nodes. The sensor nodes may communicate with each other using an inter-integrated circuit protocol to share position information. A processor at one of the sensor nodes may recognize that the magnetic signal is shared between the adjacent sensor nodes and may reconcile the position information from both sensor nodes to determine the position of the magnet during the transition.

The reconciliation process may involve comparing the magnetic field measurements from both adjacent sensor nodes and may determine which sensor node has a stronger magnetic signal. The sensor node with the stronger magnetic signal may be designated as the primary sensor node for providing position information to the controller. Alternatively, the reconciliation process may combine the position information from both sensor nodes to calculate a weighted average position based on the relative magnetic field strengths detected at each sensor node.

The sensor nodes may operate in a daisy-chained configuration where position information may be passed sequentially from one sensor node to an adjacent sensor node. Each sensor node may receive position information from a preceding sensor node via the communication interface and may store the received position information in data storage using direct memory access controllers. The direct memory access controllers may transfer the incoming position information directly to the data storage without intervention from the processors, thereby reducing processor overhead and improving responsiveness of the sensor node.

When a sensor node determines that the magnet has entered the respective range of detection of that sensor node, the sensor node may begin providing position information based on measurements from the magnetic sensors at that sensor node. The sensor node may also transmit the position information to a subsequent sensor node in the daisy chain. The subsequent sensor node may store the received position information and may be prepared to take over position measurement when the magnet transitions into the respective range of detection of the subsequent sensor node.

The coordination between sensor nodes may provide continuous position measurement across the full stroke length of the piston. As the piston extends or retracts, the magnet may sequentially pass through the respective ranges of detection of multiple sensor nodes. Each sensor node may provide position information for the portion of the stroke length corresponding to the respective range of detection of that sensor node. The transitions between sensor nodes may be handled by the reconciliation process to avoid discontinuities in the position measurement.

The position sensing system may also account for environmental noise such as interference from the Earth's magnetic field. Having multiple magnetic sensors at each sensor node may allow the sensor node to filter out environmental noise by comparing measurements from the multiple magnetic sensors. The multiple magnetic sensors at each sensor node may be positioned close together such that environmental noise affects all of the magnetic sensors similarly, while the magnetic field from the magnet may vary across the magnetic sensors based on the position of the magnet. The sensor node may use the differences in measurements between the magnetic sensors to distinguish the magnetic field from the magnet from environmental noise.

The position information provided by the position sensing system may be updated in real time as the piston moves within the cylinder. The magnetic sensors may continuously monitor the magnetic field, and the processors at each sensor node may continuously process the magnetic field measurements to determine the position of the magnet. The communication interfaces may transmit updated position information to the controller at a rate sufficient for the controller to perform precise position control, speed control, or proportional-integral-derivative control of the cylinder actuator.

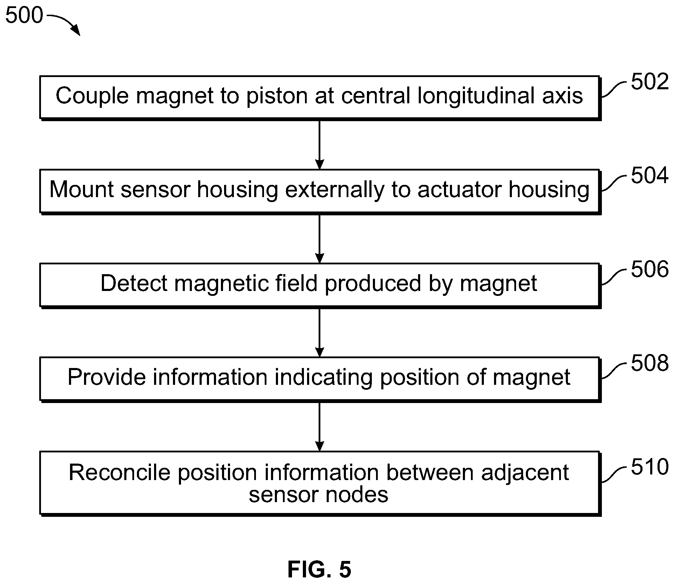

Referring to FIG. 5, a flowchart of a method 500 of sensing a position of a piston in a cylinder actuator is illustrated according to an example implementation. The method 500 may be performed using the position sensing system described above with respect to FIGS. 2-4, including the linear position sensor 116 having the plurality of sensor nodes 224-228 and the magnet 220 coupled to the piston 206.

At block 502, the method 500 may include coupling a magnet to the piston at a central longitudinal axis of the piston and a cylinder of the cylinder actuator. For example, the magnet 220 may be coupled to the piston head 208 of the piston 206 via a shoulder screw 222 or other fastening means. The magnet 220 may be disposed at the central longitudinal axis 212 of the piston 206 and the cylinder 204 such that the magnet 220 is at a fixed distance from the node plane 232 regardless of the bore diameter 205, the stroke length 216, or the rod diameter 211.

At block 504, the method 500 may include mounting a sensor housing externally to an actuator housing containing the cylinder actuator. The sensor housing 118 may be mounted to the actuator housing 108 via a plurality of flanges 120-126. The sensor housing 118 may include a plurality of sensor nodes 224-228 mounted at the node plane 232 that is at a particular distance 234 from the central longitudinal axis 212 regardless of a diameter of the cylinder 204. The number of sensor nodes may be varied based on the stroke length 216 of the piston 206.

At block 506, the method 500 may include detecting, by one or more magnetic sensors of a sensor node of the plurality of sensor nodes, a magnetic field produced by the magnet when the magnet is within a respective range of detection associated with the sensor node. The magnetic sensors 404 at each sensor node 400 may detect changes in magnetic field strength or intensity as the magnet 220 moves within the respective range of detection of that sensor node. In some cases, detecting the magnetic field may include detecting changes in electrical resistance of anisotropic magnetoresistive sensors in response to the magnetic field produced by the magnet 220.

At block 508, the method 500 may include providing, by the sensor node, information indicating a position of the magnet based on the detected magnetic field. The processor(s) 402 of the sensor node 400 may process the magnetic field measurements from the magnetic sensors 404 and may generate position information indicating the location of the magnet 220 and the piston 206. The position information may be transmitted via the communication interface 406 to a controller of the assembly 100 or to other sensor nodes.

At block 510, the method 500 may include reconciling position information between adjacent sensor nodes of the plurality of sensor nodes when the magnet is in a transition region between respective ranges of detection of the adjacent sensor nodes. When the magnet 220 transitions from the respective range of detection of one sensor node to the respective range of detection of an adjacent sensor node, both sensor nodes may detect the magnetic signal. The sensor nodes may communicate with each other using an inter-integrated circuit protocol to share position information and determine the position of the magnet 220 during the transition region. A chip onboard one of the sensor nodes may recognize the magnetic signal between adjacent nodes and may reconcile the position information from both sensor nodes.

The modular linear position sensor configuration described herein may provide position sensing capabilities for cylinder actuators across various actuator configurations. The configuration may accommodate different stroke lengths by varying the number of sensor nodes included in the sensor housing. Each sensor node may be associated with a respective range of detection, and additional sensor nodes may be added to extend the sensing range for longer stroke lengths. The sensor housing may be lengthened and additional mounting flanges may be added as more sensor nodes are incorporated into the configuration.

The configuration may also accommodate different cylinder bore diameters. The node plane at which the sensor nodes are mounted may be formed at a particular distance from a central longitudinal axis of the cylinder that remains fixed regardless of the cylinder bore diameter. This fixed distance relationship may be achieved by mounting the sensor housing to an actuator housing that has consistent external dimensions regardless of the cylinder bore diameter machined therein. Since a magnet coupled to the piston may be disposed at the central longitudinal axis, the magnet may also be at the fixed distance from the node plane regardless of the cylinder bore diameter. This arrangement may allow the same sensor configuration and the same magnet to be used with cylinders of different bore diameters.

The configuration may further accommodate different rod diameters. Since the relative location of the magnet to the sensor nodes at the node plane may remain the same regardless of the rod diameter, various combinations of rod diameter and bore diameter may be used with the same sensor configuration. This modularity may reduce the number of different sensor configurations that are maintained for different actuator configurations.

The non-contacting sensing method employed by the configuration may detect changes in a magnetic field produced by the magnet coupled to the piston without physical contact between the sensor nodes and the piston or other moving components of the cylinder actuator. This non-contacting approach may avoid introducing additional leak points that could otherwise be present with contact-based sensing approaches. The absence of additional leak points may be advantageous in applications where fluid leakage from the cylinder actuator is undesirable.

The position sensing capabilities provided by the configuration may enable various applications. Sensing the position of a piston rod in real time may allow for precise position control, speed control, and proportional-integral-derivative control of the cylinder actuator. Such capabilities may enable steering applications, applications requiring multiple position set-points, and controlling multiple actuators in unison.

The detailed description above describes various features and operations of the disclosed systems with reference to the accompanying figures. The illustrative implementations described herein are not meant to be limiting. Certain aspects of the disclosed systems can be arranged and combined in a wide variety of different configurations, all of which are contemplated herein.

Further, unless context suggests otherwise, the features illustrated in each of the figures may be used in combination with one another. Thus, the figures should be generally viewed as component aspects of one or more overall implementations, with the understanding that not all illustrated features are necessary for each implementation.

Additionally, any enumeration of elements, blocks, or steps in this specification or the claims is for purposes of clarity. Thus, such enumeration should not be interpreted to require or imply that these elements, blocks, or steps adhere to a particular arrangement or are carried out in a particular order.

Further, devices or systems may be used or configured to perform functions presented in the figures. In some instances, components of the devices and/or systems may be configured to perform the functions such that the components are actually configured and structured (with hardware and/or software) to enable such performance. In other examples, components of the devices and/or systems may be arranged to be adapted to, capable of, or suited for performing the functions, such as when operated in a specific manner.

By the term "substantially" or "about" it is meant that the recited characteristic, parameter, or value need not be achieved exactly, but that deviations or variations, including for example, tolerances, measurement error, measurement accuracy limitations and other factors known to those with skill in the art, may occur in amounts that do not preclude the effect the characteristic was intended to provide.

The arrangements described herein are for purposes of example only. As such, those skilled in the art will appreciate that other arrangements and other elements (e.g., machines, interfaces, operations, orders, and groupings of operations, etc.) can be used instead, and some elements may be omitted altogether according to the desired results. Further, many of the elements that are described are functional entities that may be implemented as discrete or distributed components or in conjunction with other components, in any suitable combination and location.

While various aspects and implementations have been disclosed herein, other aspects and implementations will be apparent to those skilled in the art. The various aspects and implementations disclosed herein are for purposes of illustration and are not intended to be limiting, with the true scope being indicated by the following claims, along with the full scope of equivalents to which such claims are entitled. Also, the terminology used herein is for the purpose of describing particular implementations only, and is not intended to be limiting.

Embodiments of the present disclosure can thus relate to one of the enumerated example embodiments (EEEs) listed below.

EEE 1. An assembly comprising: an actuator housing; a cylinder actuator mounted within the actuator housing, wherein the cylinder actuator has a cylinder and a piston that is movable within the cylinder, wherein a range of movement of the piston is divided into a set of ranges of detection; a magnet coupled to the piston and disposed at a central longitudinal axis of the piston and the cylinder; and a linear position sensor having a sensor housing that is mounted externally to the actuator housing, and a plurality of sensor nodes mounted within the sensor housing at a node plane that is formed at a particular distance from the central longitudinal axis of the cylinder regardless of a diameter of the cylinder, wherein each sensor node of the plurality of sensor nodes is associated with a respective range of detection of the set of ranges of detection and includes one or more magnetic sensors, and wherein the one or more magnetic sensors provide information indicating a position of the magnet when the magnet is in the respective range of detection of the sensor node.

EEE 2. The assembly of EEE 1, wherein the plurality of sensor nodes are equi-spaced along a length of the sensor housing.

EEE 3. The assembly of any of EEEs 1-2, wherein the one or more magnetic sensors of each sensor node are anisotropic magnetoresistive sensors.

EEE 4. The assembly of any of EEEs 1-3, wherein the piston has a piston head and a rod extending from the piston head along the central longitudinal axis, and wherein the magnet is coupled to the piston head.

EEE 5. The assembly of EEE 4, wherein the magnet is fixed to the piston head via a shoulder screw having a shoulder that is bigger than a major diameter of threads of the shoulder screw such that the shoulder screw bottoms out without contacting the magnet.

EEE 6. The assembly of any of EEEs 1-5, wherein the sensor housing has a first housing portion and a second housing portion with an elastomer seal therebetween, wherein the second housing portion interfaces with the actuator housing.

EEE 7. The assembly of EEE 6, wherein the node plane is formed in the first housing portion.

EEE 8. The assembly of any of EEEs 6-7, wherein the sensor housing is mounted to the actuator housing via one or more flanges formed in the first housing portion.

EEE 9. The assembly of any of EEEs 1-8, wherein each sensor node of the plurality of sensor nodes includes a plurality of magnetic sensors for noise mitigation.

EEE 10. The assembly of any of EEEs 1-9, wherein the one or more magnetic sensors of the plurality of sensor nodes are mounted on a printed circuit board disposed within the sensor housing.

EEE 11. The assembly of any of EEEs 1-10, wherein a number of sensor nodes of the plurality of sensor nodes corresponds to a stroke length of the piston, and wherein one or more additional sensor nodes are added to extend a sensing range for longer stroke lengths.

EEE 12. A position sensing system for a cylinder actuator having a piston movable within a cylinder, the position sensing system comprising: a magnet configured to be coupled to the piston at a central longitudinal axis of the cylinder; a sensor housing configured to be mounted externally to an actuator housing containing the cylinder actuator; and a plurality of sensor nodes mounted within the sensor housing at a node plane, wherein the node plane is positioned at a fixed distance from the central longitudinal axis regardless of a bore diameter of the cylinder, wherein each sensor node of the plurality of sensor nodes includes one or more magnetic sensors configured to detect a magnetic field of the magnet, and wherein a number of sensor nodes of the plurality of sensor nodes is variable based on a stroke length of the piston.

EEE 13. The position sensing system of EEE 12, wherein the plurality of sensor nodes are equi-spaced along a length of the sensor housing.

EEE 14. The position sensing system of any of EEEs 12-13, wherein each sensor node of the plurality of sensor nodes includes a plurality of magnetic sensors positioned proximate to each other for environmental noise mitigation.

EEE 15. The position sensing system of EEE 14, wherein the plurality of magnetic sensors of each sensor node are anisotropic magnetoresistive sensors mounted on a printed circuit board disposed within the sensor housing.

EEE 16. The position sensing system of any of EEEs 12-15, wherein the sensor housing comprises a first housing portion and a second housing portion configured to snap together with an elastomer seal therebetween, wherein the node plane is formed in the first housing portion.

EEE 17. A method of sensing a position of a piston in a cylinder actuator, the method comprising: coupling a magnet to the piston at a central longitudinal axis of the piston and a cylinder of the cylinder actuator; mounting a sensor housing externally to an actuator housing containing the cylinder actuator, wherein the sensor housing includes a plurality of sensor nodes mounted at a node plane that is at a particular distance from the central longitudinal axis regardless of a diameter of the cylinder; detecting, by one or more magnetic sensors of a sensor node of the plurality of sensor nodes, a magnetic field produced by the magnet when the magnet is within a respective range of detection associated with the sensor node; and providing, by the sensor node, information indicating a position of the magnet based on the detected magnetic field.

EEE 18. The method of EEE 17, wherein detecting the magnetic field comprises detecting changes in electrical resistance of anisotropic magnetoresistive sensors in response to the magnetic field produced by the magnet.

EEE 19. The method of any of EEEs 17-18, further comprising: reconciling position information between adjacent sensor nodes of the plurality of sensor nodes when the magnet is in a transition region between respective ranges of detection of the adjacent sensor nodes.

EEE 20. The method of EEE 19, wherein reconciling position information comprises communicating between the adjacent sensor nodes using an inter-integrated circuit protocol to share position information and determine the position of the magnet during the transition region.

EEE 21. The assembly of any of EEEs 1-11 or the position sensing system of any of EEEs 12-16, wherein the plurality of sensor nodes are configured to operate in a daisy-chained configuration, and wherein each sensor node includes one or more direct memory access controllers configured to transfer position information between sensor nodes without intervention from a processor of the sensor node.

EEE 22. The assembly of any of EEEs 1-11 or the position sensing system of any of EEEs 12-16, wherein the sensor housing includes a vent with a breathable patch configured to allow air to move in and out of the sensor housing.

EEE 23. The assembly of any of EEEs 1-11, wherein the actuator housing is configured as a common extrusion with a bore of the cylinder machined therein, and wherein the bore is machined to different diameters while maintaining the same external dimensions of the actuator housing.

EEE 24. The assembly of any of EEEs 1-11, further comprising: an electric motor; a pump driven by the electric motor; an accumulator disposed within the actuator housing; and a manifold having fluid passages that provide fluid communication between the pump, the cylinder actuator, and the accumulator.

EEE 25. The assembly of any of EEEs 1-11 or the position sensing system of any of EEEs 12-16, wherein each sensor node is configured to detect position of the piston in four inch increments.

EEE 26. The assembly of EEE 9 or the position sensing system of EEE 14, wherein each sensor node includes three magnetic sensors.

EEE 27. The assembly of any of EEEs 1-11 or the position sensing system of any of EEEs 12-16, wherein each sensor node includes a communication interface having Universal Synchronous/Asynchronous Receive Transmit channels as communication links between the sensor nodes.

EEE 28. The method of any of EEEs 19-20, wherein reconciling position information comprises calculating a weighted average position based on relative magnetic field strengths detected at each of the adjacent sensor nodes.

## Claims

1. An assembly (100) comprising:
an actuator housing (108);
a cylinder actuator (110) mounted within the actuator housing (108), wherein the cylinder actuator (110) has a cylinder (204) and a piston (206) that is movable within the cylinder (204), wherein a range of movement of the piston (206) is divided into a set of ranges of detection;
a magnet (220) coupled to the piston (206) and disposed at a central longitudinal axis (212) of the piston (206) and the cylinder (204); and
a linear position sensor (116) having a sensor housing (118) that is mounted externally to the actuator housing (108), and a plurality of sensor nodes (224, 226, 228) mounted within the sensor housing (118) at a node plane (232) that is formed at a particular distance (234) from the central longitudinal axis (212) of the cylinder (204) regardless of a diameter of the cylinder (204), wherein each sensor node of the plurality of sensor nodes (224, 226, 228) is associated with a respective range of detection of the set of ranges of detection and includes one or more magnetic sensors (404), and wherein the one or more magnetic sensors (404) provide information indicating a position of the magnet (220) when the magnet (220) is in the respective range of detection of the sensor node.

2. The assembly of claim 1, wherein the plurality of sensor nodes (224, 226, 228) are equi-spaced along a length of the sensor housing (118), and/or wherein the one or more magnetic sensors (404) of each sensor node are anisotropic magnetoresistive sensors.

3. The assembly of claim 1 or 2, wherein the piston (206) has a piston head (208) and a rod (210) extending from the piston head (208) along the central longitudinal axis (212), wherein the magnet (220) is coupled to the piston head (208), and wherein the magnet (220) is fixed to the piston head (208) via a shoulder screw (222) having a shoulder that is bigger than a major diameter of threads of the shoulder screw (222) such that the shoulder screw (222) bottoms out without contacting the magnet (220).

4. The assembly of any of claims 1 to 3, wherein the sensor housing (118) has a first housing portion (200) and a second housing portion (202) with an elastomer seal therebetween, wherein the second housing portion (202) interfaces with the actuator housing (108), wherein the node plane (232) is formed in the first housing portion (200), and/or wherein the sensor housing (118) is mounted to the actuator housing (108) via one or more flanges (120, 122, 124, 126) formed in the first housing portion (200).

5. The assembly of any of claims 1 to 4, wherein each sensor node of the plurality of sensor nodes (224, 226, 228) includes a plurality of magnetic sensors (404) for noise mitigation, and/or wherein the one or more magnetic sensors (404) of the plurality of sensor nodes (224, 226, 228) are mounted on a printed circuit board disposed within the sensor housing (118).

6. The assembly of any of claims 1 to 5, wherein a number of sensor nodes of the plurality of sensor nodes (224, 226, 228) corresponds to a stroke length (216) of the piston (206), and wherein one or more additional sensor nodes are added to extend a sensing range for longer stroke lengths.

7. A position sensing system for a cylinder actuator (110) having a piston (206) movable within a cylinder (204), the position sensing system comprising:
a magnet (220) configured to be coupled to the piston (206) at a central longitudinal axis (212) of the cylinder (204);
a sensor housing (118) configured to be mounted externally to an actuator housing (108) containing the cylinder actuator (110); and
a plurality of sensor nodes (224, 226, 228) mounted within the sensor housing (118) at a node plane (232), wherein the node plane (232) is positioned at a fixed distance (234) from the central longitudinal axis (212) regardless of a bore diameter (205) of the cylinder (204), wherein each sensor node of the plurality of sensor nodes (224, 226, 228) includes one or more magnetic sensors (404) configured to detect a magnetic field of the magnet (220), and wherein a number of sensor nodes of the plurality of sensor nodes (224, 226, 228) is variable based on a stroke length (216) of the piston (206).

8. The position sensing system of claim 7, wherein the plurality of sensor nodes (224, 226, 228) are equi-spaced along a length of the sensor housing (118), and/or wherein each sensor node of the plurality of sensor nodes (224, 226, 228) includes a plurality of magnetic sensors (404) positioned proximate to each other for environmental noise mitigation.

9. The position sensing system of claim 7 or 8, wherein the plurality of magnetic sensors (404) of each sensor node are anisotropic magnetoresistive sensors mounted on a printed circuit board disposed within the sensor housing (118), and/or wherein the sensor housing (118) comprises a first housing portion (200) and a second housing portion (202) configured to snap together with an elastomer seal therebetween, wherein the node plane (232) is formed in the first housing portion (200).

10. The assembly of any of claims 1 to 6 or the position sensing system of any of claims 7 to 9, wherein the plurality of sensor nodes (224, 226, 228) are configured to operate in a daisy-chained configuration, and wherein each sensor node includes one or more direct memory access controllers (412) configured to transfer position information between sensor nodes without intervention from a processor (402) of the sensor node.

11. A method of sensing a position of a piston (206) in a cylinder actuator (110), the method comprising:
coupling a magnet (220) to the piston (206) at a central longitudinal axis (212) of the piston (206) and a cylinder (204) of the cylinder actuator (110);
mounting a sensor housing (118) externally to an actuator housing (108) containing the cylinder actuator (110), wherein the sensor housing (118) includes a plurality of sensor nodes (224, 226, 228) mounted at a node plane (232) that is at a particular distance (234) from the central longitudinal axis (212) regardless of a diameter of the cylinder (204);
detecting, by one or more magnetic sensors (404) of a sensor node of the plurality of sensor nodes (224, 226, 228), a magnetic field produced by the magnet (220) when the magnet (220) is within a respective range of detection associated with the sensor node; and
providing, by the sensor node, information indicating a position of the magnet (220) based on the detected magnetic field.

12. The method of claim 11, wherein detecting the magnetic field comprises detecting changes in electrical resistance of anisotropic magnetoresistive sensors in response to the magnetic field produced by the magnet (220).

13. The method of claim 11 or 12, further comprising: reconciling position information between adjacent sensor nodes of the plurality of sensor nodes (224, 226, 228) when the magnet (220) is in a transition region between respective ranges of detection of the adjacent sensor nodes.

14. The method of claim 13, wherein reconciling position information comprises communicating between the adjacent sensor nodes using an inter-integrated circuit (I²C) protocol to share position information and determine the position of the magnet (220) during the transition region.

15. The method of claim 13 or 14, wherein reconciling position information comprises calculating a weighted average position based on relative magnetic field strengths detected at each of the adjacent sensor nodes.
